**Europäisches Patentamt**

(19) **European Patent Office**

**Office européen des brevets**

(11) Veröffentlichungsnummer: **0 019 196**
**B1**

(12) ## EUROPÄISCHE PATENTSCHRIFT

(45) Veröffentlichungstag der Patentschrift:
28.09.83

(51) Int. Cl.³: **B 23 K 11/30**, B 23 K 11/06

(21) Anmeldenummer: **80102477.9**

(22) Anmeldetag: **07.05.80**

(54) **Vorrichtung zum Widerstands-Rollennahtschweissen.**

(30) Priorität: 14.05.79 DE 2919365
18.01.80 DE 3001832

(43) Veröffentlichungstag der Anmeldung:
26.11.80 Patentblatt 80/24

(45) Bekanntmachung des Hinweises auf die Patenterteilung:
28.09.83 Patentblatt 83/39

(84) Benannte Vertragsstaaten:
BE CH FR GB IT LI NL

(56) Entgegenhaltungen:
DE-C-330 571
FR-A-2 213 833
FR-A-2 369 901
GB-A-8 543
US-A-1 943 771
US-A-3 015 713
US-A-3 596 225

(73) Patentinhaber: **Habenicht, Gerd, Prof. Dr.-Ing.,**
**Heimstättenallee 5a, D-8033 Planegg b. München (DE)**
Patentinhaber: **Fischer, Fritz, Prof. Dr.-Ing.,**
**Merowingerstrasse 19, D-5450 Neuwied 11 (DE)**

(72) Erfinder: **Habenicht, Gerd, Prof. Dr.-Ing.,**
**Heimstättenallee 5a, D-8033 Planegg b. München (DE)**
Erfinder: **Fischer, Fritz, Prof. Dr.-Ing.,**
**Merowingerstrasse 19, D-5450 Neuwied 11 (DE)**

(74) Vertreter: **Glawe, Delfs, Moll & Partner Patentanwälte,**
**Postfach 26 01 62 Liebherrstrasse 20,**
**D-8000 München 26 (DE)**

## Vorrichtung zum Widerstands-Rollennahtschweißen

Die Erfindung betrifft eine Vorrichtung zum elektrischen Widerstands-Rollennahtschweißen mit mindestens einer zur Abrollbewegung am Schweißgut bestimmten Elektrodenanordnung, die ein das Schweißgut nicht berührendes, an die Stromzufuhr angeschlossenes Anpreßteil aus einem elektrisch und thermisch gut leitfähigen Material, z. B. Kupfer, und ein als endlos umlaufendes Element ausgebildetes, zur abrollenden Anlage am Schweißgut bestimmtes Kontaktteil, das beweglich vom Anpreßteil gegen das Schweißgut anpreßbar ist, aufweist.

Es ist bekannt, daß das Widerstandsschweißen bestimmter Werkstoffe, insbesondere mit metallischen Überzügen wie Zinn, Zink, Blei usw. versehener Eisenbleche, in der industriellen Anwendung auf erhebliche Schwierigkeiten stößt, weil die üblicherweise verwendeten Elektroden auf Kupferbasis unter der Wirkung der Schweißtemperaturen und der Anpreßdrücke Legierungen mit dem Beschichtungswerkstoff des Schweißgutes eingehen und dadurch kontaminiert werden. Durch diese je nach den Schweißbedingungen unterschiedliche und im Verfahrensablauf nicht oder wenig beeinflußbare Legierungsbildung werden die Schweißparameter, insbesondere die den Strom- und Wärmedurchgang beeinflussenden Werkstoffkennwerte des Elektrodenmaterials verändert und dadurch die Schweißgefügebildung beeinträchtigt, so daß eine gleichmäßige Schweißnahtausbildung nicht mehr gewährleistet ist. Auch die mechanischen Eigenschaften der Elektroden wie Härte, Wärmefestigkeit, geometrische Form usw. können durch die genannten Vorgänge verändert werden, wodurch ebenfalls die Schweißparameter und die Elektrodenstandzeiten beeinträchtigt werden.

Aus der CH-A-370 175 ist eine Vorrichtung der eingangs genannten Art bekannt, bei der die genannten Schwierigkeiten dadurch vermieden werden sollen, daß das Kontaktteil der Elektrode als Draht, vorzugsweise aus Kupfer, ausgebildet ist, der um eine Anpreßrolle herumgelegt und angetrieben ist, so daß der Schweißstelle ständig frischer, noch nicht verunreinigter Draht zugeführt und der durch den Schweißvorgang kontaminierte Draht wegtransportiert wird. Gemäß einer Ausführungsform dieser bekannten Vorrichtung soll der Draht als endlose Schlinge über die Anpreßrolle und eine Umlenkrolle geführt sein und nach Verlassen der Schweißstelle eine Reinigungsvorrichtung durchlaufen, so daß er mehrfach verwendet werden kann. Damit sind aber in der Praxis Nachteile verbunden. Der Kupferdraht erfährt durch den Schweißdruck und die Schweißtemperatur erhebliche Querschnittsänderungen, und ferner wäre eine hinreichende Reinigung des Drahtes von der durch Legierungsbildung verursachten Oberflächenkontamination nur unter beträchtlicher Materialwegnahme vom Drahtquerschnitt möglich. Diese querschnittsveränderten Einflüsse würden nur wenige Umläufe der endlosen Drahtschlinge zulassen, wobei sich überdies die Schweißparameter entsprechend den Querschnittsvariationen ändern würden. Auch nur annähernd ausreichende Standzeiten sind mit einer solchen Vorrichtung nicht erreichbar.

Es hat sich daher in der Praxis nur eine andere Variante der bekannten Vorrichtung durchgesetzt, bei der der Kupferdraht von einer Vorratsrolle abgewickelt und nach Durchlauf durch die Schweißstelle auf eine Aufnahmerolle aufgewickelt und dann aus der Vorrichtung entfernt und z. B. eingeschmolzen wird. Gemäß DE-B-1 565 803 ist auch ein zweimaliger Durchlauf des Drahtes an der Ober- und Unterseite der Schweißstelle möglich. Dieses Verfahren findet derzeit zum Rollennahtschweißen von metallbeschichteten Feinstblechen, insbesondere in der Konservenindustrie, breite Anwendung. Nachteilig hierbei ist jedoch, daß der Kupferdraht ein Verbrauchsmaterial ist, das laufend neu zugeführt werden muß und nach ein- oder zweimaligem Durchlauf verbraucht ist. Beim laufenden Schweißen größerer Mengen Schweißgut ist eine ständige Nachlieferung von Drahtvorratsrollen zu der Schweißvorrichtung und eine Abnahme der Aufnahmespulen mit dem verbrauchten Kupferdraht erforderlich. Jeder Rollenwechsel bedeutet eine Betriebsunterbrechung, so daß das bekannte Verfahren letztlich ein diskontinuierliches Verfahren ist. Da der Draht, bezogen auf sein Gewicht, beim Schweißvorgang weniger als 1% Beschichtungsmetall, z. B. Zinn, aufnimmt, muß eine unverhältnismäßig große Kupferdrahtmenge bereitgestellt werden. Weitere Nachteile bestehen darin, daß der relativ weiche Kupferdraht durch den Schweißdruck deformiert wird und beim zweiten Durchlauf nicht mehr den gleichen Querschnitt hat wie beim ersten Durchlauf, und daß für die Führung, Umlenkung das Ab- und Aufwickeln, den Ausgleich der beim Schweißen auftretenden Drahtlängung und gegebenenfalls für eine Querschnittsnachbearbeitung des Kupferdrahtes komplizierte und aufwendige Mechanismen erforderlich sind.

Beim Punktschweißen von metallbeschichteten Blechen ist es bekannt, zusammengesetzte Elektroden zu verwenden, die aus einem Hauptteil aus Kupfer und einem damit mechanisch festverbundenen, zur Anlage am Schweißgut bestimmten Einsatz oder Kontaktteil aus Wolfram oder einem ähnlichen, mit dem Beschichtungswerkstoff des Schweißgutes nicht oder nur wenig legierbaren Metall- oder Legierungswerkstoff (z. B. gemäß DE-A-1 914 424) bestehen. Hierdurch kann zwar die Elektrodenkontamination durch Legierungsbildung stark verringert werden, es ergaben sich aber erhebliche Schwierigkeiten aufgrund des unterschiedlichen Wärmedehnungsverhaltens der Elektrodenwerkstoffe, die bei den Schweißtemperaturen zu erheblichen thermischen Spannungen in der Elektrode, zu Brüchen, zu einem
Lockerwerden der Verbindung zwischen dem
Anpreß- und dem Kontaktteil und damit zu einer
Änderung der Stromdurchgangseigenschaften
und der Wärmeableitung führen, was letztlich
wiederum unkontrollierte Änderungen der
Schweißparameter und/oder eine verringerte
Elektrodenstandzeit zur Folge haben kann.

Diese bereits bei Punktschweißelektroden
auftretenden Schwierigkeiten sind bei Verbundelektroden für das Rollennahtschweißen,
die z. B. aus einer Kupferrolle mit einem auf
deren Umfang aufgebrachten Belag aus Wolfram (z. B. gemäß GB-A-8 543) od. dgl. bestehen
können, noch ungleich größer, weil hier eine
einwandfreie Verbindung mit gleichmäßigeren
Strom- und Wärmedurchgangseigenschaften
auf dem ganzen Umfang der Elektrode und unter
dem Einfluß der Abrollbewegung auf dem
Schweißgut aufrechterhalten werden muß und
außerdem die geforderten Standzeiten wesentlich größer sind. Eine befriedigende Konstruktion einer Verbundelektrode für das Rollennahtschweißen ist noch nicht gefunden worden.

Aufgabe der Erfindung ist es, eine Vorrichtung
der eingangs genannten Art so zu verbessern,
daß ein ständiger Verbrauch von Elektrodendraht vermieden und hohe Standzeiten der
Vorrichtung ohne Veränderung der Schweißparameter durch Elektrodenkontamination und dgl.
erzielt werden können.

Erfindungsgemäß wird diese Aufgabe bei
einer Vorrichtung der eingangs genannten Art
dadurch gelöst, daß das Kontaktteil als ein
starrer Ring aus einem legierungsinerten und
warmfesten Material ausgebildet ist, der das
Anpreßteil umgibt und an diesem in einer
Relativbewegungen zulassenden Weise geführt
oder gehaltert wird.

Hierdurch wird der Vorteil erzielt, daß das
Kontaktteil aufgrund seines dem Schweißgut
gegenüber legierungsinerten Materials praktisch frei von Legierungskontamination und
durch seine Warmfestigkeit auch frei von
Querschnittsänderungen durch Schweißdruck
und Schweißtemperatur bleibt und daher hohe
Standzeiten ohne Änderung der Schweißparameter ermöglicht. Eine solche Materialwahl
wäre bei der bekannten Vorrichtung mit flexibel
über Umlenkrollen geführter Drahtelektrode
wegen der beim Umlauf ständig sich wiederholenden Biegeverformungen nicht möglich. Andererseits besteht gegenüber Verbundelektroden der Vorteil, daß bei der erfindungsgemäßen
Vorrichtung Anpreßteil und Kontaktteil keinen
festen mechanischen Verbund haben und daher
die oben erwähnten unterschiedlichen Wärmedehnungen auch nicht zu einer Lockerung einer
solchen Verbindung und damit auch nicht zu
einer unkontrollierten Veränderung der Strom-
und Wärmedurchgangseigenschaften und damit
der Schweißparameter führen können.

Gemäß einer Ausführungsform der Erfindung
ist das ringförmige Kontaktteil konzentrisch zum
Anpreßteil angeordnet und auf diesem mittels
Rollen drehbar gelagert. Diese Rollen bewirken
auch den Strom- und Wärmeübergang zum
Kontaktteil.

Gemäß einer anderen, bevorzugten Ausführungsform der Erfindung hat das ringförmige
Kontaktteil größeren Durchmesser als das
Anpreßteil und führt eine zu diesem exzentrische
Umlaufbewegung aus. Dies hat den besonderen
Vorteil, daß das Kontaktteil auf einem beträchtlichen Teil seines Umlaufweges im Abstand vom
Anpreßteil verläuft und deshalb dort unabhängig
vom Anpreßteil z. B. gekühlt oder auch von
anhaftenden Rückständen gereinigt werden
kann. Auf seinem im Abstand vom Anpreßteil
verlaufenden Umlaufweg kann das Kontaktteil
durch zusätzliche Führungsrollen geführt und
unterstützt sein.

Der Antrieb des umlaufenden Kontaktteils
kann durch das Anpreßteil oder aber durch eine
oder mehrere am Kontaktteil angreifende Antriebsrollen bewirkt werden.

Auf dem in Abstand vom Anpreßteil verlaufenden Teil des Umlaufweges des Kontaktteils ist
vorzugsweise eine Kühlvorrichtung, z. B. in Form
eines Gebläses, und/oder eine Reinigungsvorrichtung zum Reinigen des Kontaktteils von
anhaftendem Zinn od. dgl. angeordnet. Letztere
kann z. B. aus Bürsten oder Schabern bestehen,
gegebenenfalls verbunden mit einer Aufheizvorrichtung zum Aufheizen bis auf die Schmelztemperatur des zu entfernenden Teils.

Bei einer weiteren, besonders einfachen und
vorteilhaften Ausführungsform der Erfindung ist
das ringförmige Kontaktteil mit für radiale
Wärmedehnungen ausreichender Radialbeweglichkeit zwischen Einspannflächen des Anpreßteils mit einer für den Strom- und Wärmeübergang ausreichenden Anpreßkraft eingespannt.

Im Gegensatz zu vorgenannten Ausführungsformen wird hierbei der für den Strom- und
Wärmeübergang wesentliche Berührungsdruck
zwischen Anspreß- und Kontaktteil nicht durch
die Anpressung gegen das Schweißgut aufgebracht, sondern völlig unabhängig davon durch
die Einspannung des Kontaktteils am Anpreßteil
mittels einer im wesentlichen senkrecht zur
Ringebene und damit zur Anpreßrichtung am
Schweißgut wirkenden Einspannkraft. Durch
Bemessung der Einspannkraft so, daß radiale
Wärmedehnungen sich auch abspielen können,
ist gewährleistet, daß sich in der Elektrode keine
hohen Wärmespannungen aufbauen können und
Risse in der Elektrode oder ein Lockerwerden
des Kontaktteils nicht eintreten kann. Man hat
damit wohl definierte und von örtlichen Erwärmungen weitgehend unabhängige Strom- und
Wärmeübergangsverhältnisse zwischen Anpreß- und Kontaktteil der Elektrode.

Die Gleichmäßigkeit der Einspannung und des
Strom- und Wärmeübergangs kann durch zusätzliche Maßnahmen noch verbessert werden, z. B.
Einspannen mittels Spannmitteln mit von Materialdehnungen unabhängiger Einspannkraft, wie z. B. Dehnungsschrauben, Federelementen od. dgl., und/oder zur Achse geneigte Anordnung der Einspannflächen, und/oder Beschichtung der Einspann- bzw. Anlageflächen von Anpreß- oder Kontaktteil. Solche und andere Ausgestaltungen der Erfindung sind in den Unteransprüchen angegeben.

Ausführungsformen der Erfindung werden anhand der Zeichnungen näher erläutert.

Fig. 1 zeigt in schematischer Seitenansicht die Elektrodenanordnung gemäß einer Ausführungsform der erfindungsgemäßen Vorrichtung;

Fig. 2 zeigt einen Schnitt nach der Linie II-II von Fig. 1;

Fig. 3 und 4 zeigen in Seitenansicht bzw. im Schnitt nach der Linie IV-IV eine andere Ausführungsform der erfindungsgemäßen Elektrodenanordnung;

Fig. 5 und 6 zeigen in entsprechender Darstellung eine Variante der Ausführungsform nach Fig. 3 und 4;

Fig. 7 zeigt in Seitenansicht teilweise im Schnitt eine Rollenelektrode gemäß einer weiteren Ausführungsform der Erfindung;

Fig. 8 zeigt in gleicher Darstellung eine andere Ausführungsform einer erfindungsgemäßen Rollenelektrode.

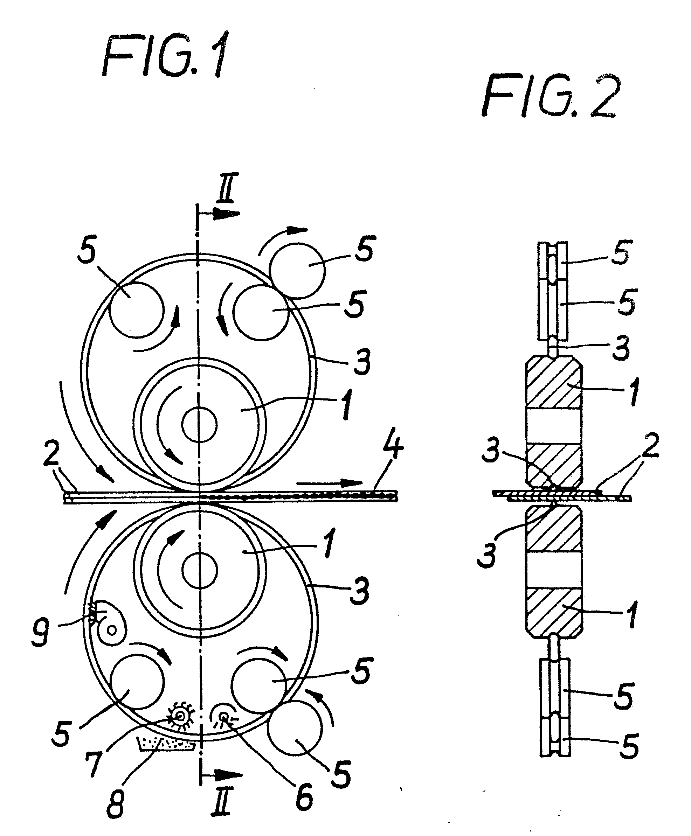

Gemäß Fig. 1 sind zwei in üblicher (und daher nicht dargestellter) Weise drehbar gelagerte, angetriebene, an die Schweißstromquelle angeschlossene und gekühlte Elektrodenrollen 1 aus Kupfer vorgesehen, zwischen denen die zu verschweißenden Bleche 2 hindurchgeführt werden. Die Elektrodenrollen 1 liegen jedoch nicht unmittelbar an den Blechen 2 an, sondern dienen dazu, jeweils einen Ring 3 aus Wolfram, Molybdän oder einem ähnlichen legierungsinerten und warmfesten Material, der zwischen der Elektrodenrolle 1 und dem Schweißgut 2 hindurchgeführt wird, gegen das Schweißgut anzupressen. Der Ring 3 aus Wolfram, Molybdän od. dgl. kann auf beliebige Weise gefertigt sein, z. B. durch Sintern, Schmieden, Gießen, Schneiden, Drehen od. dgl. Die Elektrodenrolle 1 ist somit als das Anpreßteil und auch Stromzuleitungsteil und der am Schweißgut 2 anliegende Ring 3 als das Kontaktteil der Vorrichtung anzusehen. Der Ring 3 hat größeren Durchmesser als die Elektrodenrolle 1 und berührt diese daher nur im Bereich der Schweißstelle, wo die Stromübertragung von der Elektrodenrolle 1 über den Kontaktteil 3 auf das Schweißgut 2 erfolgt, so daß sich die Schweißnaht 4 bildet. Auf dem übrigen Teil seines Umlaufweges verläuft der ringförmige Kontaktteil 3 im Abstand vom Anpreßteil 1. Er kann dort durch zusätzliche Stütz- und Führungsrollen 5 gestützt und geführt sein, die ebenso wie die als Anpreßteil dienende Elektrodenrolle 1 an ihrem Umfang Nuten zur Führung des ringförmigen Kontaktteils 3 aufweist. Eine oder mehrere der Stütz- und Führungsrollen können auch als Treibrollen ausgebildet und synchron zum Antrieb des Anpreßteils 1 und zum Vorschub des Schweißgutes 2 angetrieben sein.

Längs des Umlaufweges des in Fig. 1 unteren Kontaktteils 3 sind ferner eine Reinigungsstation, bestehend aus einem Aufheizelement 6, einer Drahtbürste 7 und einem Auffänger 8, sowie eine Kühlstation mit einem Gebläse 9 dargestellt. Entsprechende Einrichtungen können selbstverständlich auch für das obere Kontaktteil 3 vorgesehen sein.

Das Kontaktteil 3 kann je nach Material und Anwendungszweck unterschiedliche Querschnittsformen, z. B. rund, quadratisch, keilförmig aufweisen, wie sie zur Erzielung einer optimalen Schweißnaht, eines möglichst hohen Anpreßdruckes und/oder einer möglichst guten Führung auf dem Anpreßteil 1 oder den Führungsrollen 5 zweckmäßig sind.

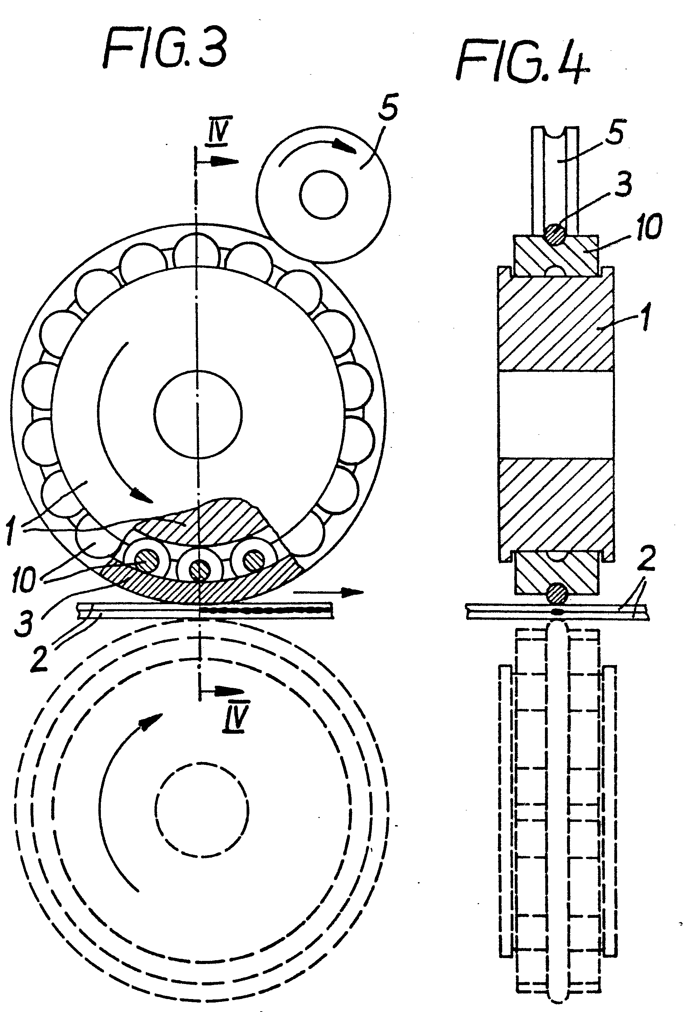

Bei der in Fig. 3 und 4 dargestellten Ausführungsform besteht jede Elektrode aus einem rollenförmigen Anpreßteil 1, welches jedoch im Gegensatz zu den vorherigen Ausführungsformen nicht drehbar gelagert zu sein braucht. Auf dem Außenumfang des Anpreßteils 1, das vorzugsweise aus Kupfer besteht, mit der Schweißstromzuleitung verbunden und mit einer gegen das Schweißgut gerichteten Kraft beaufschlagbar ist, ist ein Ring 3 aus Wolfram, Molybdän od. dgl. drehbar mittels eines Kranzes von Rollen 10 nach Art eines Rollenlagers gelagert, so daß er eine Umlaufbewegung um das Anpreßteil 3 ausführen kann. Schweißdruck und Schweißstrom werden vom Anpreßteil 1 über die Rollen 10 auf den als Kontaktteil dienenden Ring 3 und von diesem auf das Schweißgut 2 übertragen. Die in Fig. 3 untere Elektrode hat den gleichen Aufbau wie die obere Elektrode, der deshalb nicht im einzelnen dargestellt ist. Für den zum Schweißgut 2 synchronen Antrieb des Ringes 3 kann eine außen anliegende Antriebsrolle 5 dienen.

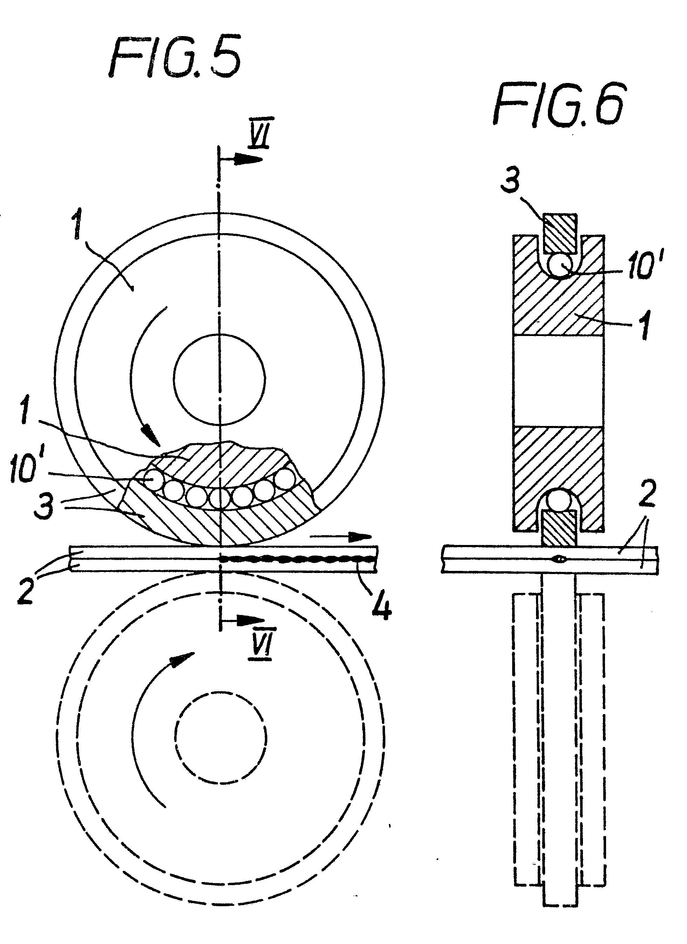

Die Ausführungsform nach Fig. 5 und 6 unterscheidet sich von der nach Fig. 3 und 4 dadurch, daß das ringförmige Kontaktteil 3 in einer Nut des Anpreßteils 1 mittels Kugeln 10' gelagert ist. Ferner ist eine gesonderte Antriebsrolle für das Kontaktteil 3 weggelassen, so daß dessen Antrieb durch Mitnahme durch das Schweißgut 2 erfolgt. Im übrigen sind Aufbau und Funktionsweise die gleiche wie bei der vorhergehenden Ausführungsform.

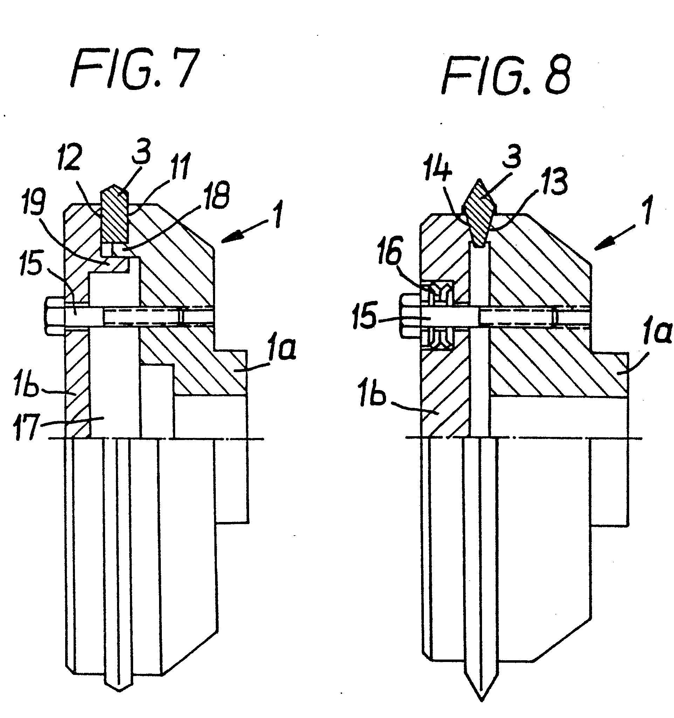

Die in Fig. 7 dargestellte Rollenelekrode hat ein als Kupferrolle ausgebildetes Anpreßteil 1, das in zwei Hälften 1a und 1b geteilt ist, die durch Schrauben 15 gegeneinander verspannt werden können. Die beiden Teile 1a und 1b bilden am Umfang eine Nut, in die ein ringförmiges Kontaktteil 3 aus einem warmfesten und legierungsinerten Material, z. B. Wolfram, Molybdän oder eine Legierung davon, eingesetzt ist, so daß es mittels der Schrauben 15 zwischen den Einspannflächen 11, 12 der beiden Elektrodenhälften 1a und 1b eingespannt ist. Die Einspannkraft mittels der Schrauben 15 ist so bemessen, daß ein einwandfreier Strom- und Wärmeübergang an den Einspannflächen 11, 12 gewährleistet ist, andererseits aber radiale Relativbewegungen zwischen dem Kontaktteil 3 und dem Anpreßteil 1 aufgrund der unterschiedlichen Wärmedehnungen im wesentlichen unbehindert möglich sind. Di Schrauben 15 sind vorzugsweise als Dehnungsschrauben ausgebildet, so daß sie eine von der Erwärmung des Anspreßteils 1 weitgehend unabhängige Einspannkraft erzeugt.

Der Raum zwischen den beiden Hälften 1a und 1b des Anpreßteils 1 kann als Hohlraum 17 für die Zirkulation eines Kühlmittels ausgebildet sein. Mittels überlappender Ringflansche 18, 19 der beiden Hälften 1a und 1b kann eine zusätzliche Abdichtung gegen radialen Austritt des Kühlmittels geschaffen werden. Die Einrichtungen für die Zuführung des Kühlmittels sind nicht dargestellt, ebensowenig die Verbindung des Anpreßteils 1 z. B. mit einer Antriebswelle, die die Ausübung einer Vorschubkraft über die Rollenelektrode auf das Schweißgut ermöglicht.

Die in Fig. 8 dargestellte Rollenelektrode unterscheidet sich nach der gemäß Fig. 7 hauptsächlich dadurch, daß die Einspannflächen 13, 14 mit denen die Elektrodenhälften 1a, 1b gegen das Kontaktteil 3 verspannt sind, einen gegenüber der Elektrodenachse schräg geneigten Verlauf haben, also konische Flächen sind. Entsprechend sind auch die zugehörigen Anlageflächen des Kontaktteils 3 konisch geneigt. An der Außenseite hat das Kontaktteil 3 ebenso wie bei der Ausführungsform nach Fig. 7 einen schneidenförmigen Verlauf entsprechend der gewünschten Breite der zu erzeugenden Schweißnaht.

Die beiden Elektrodenhälften 1a und 1b werden bei der Ausführungsform nach Fig. 8 gegeneinander verspannt mittels Schrauben 15 unter Zwischenfügung von Tellerfedern 16. Diese Tellerfedern können sowohl axiale Wärmedehnungen als auch die bei radialen Wärmedehnungen aufgrund der schrägen Einspannflächen 13, 14 auftretenden axialen Abstandsänderungen der beiden Teile 1a und 1b des Anpreßteils aufnehmen und eine im wesentlichen konstante Einspannkraft aufrechterhalten.

Die Einspannflächen 11, 12, 13, 14 und/oder die an ihnen anliegenden Anlageflächen des Kontaktteils 3 können mit einer geeigneten Beschichtung, z. B. Versilberung, versehen sein, um den Strom- und Wärmeübergang zu begünstigen und/oder die Reibung bei temperaturbedingten Relativbewegungen herabzusetzen.

Die Ausführungsbeispiele nach Fig. 7 und 8 können auch so abgeändert werden, daß das Kontaktteil nicht konzentrisch zum Anpreßteil, sondern exzentrisch ähnlich wie bei der Ausführungsform nach Fig. 1 angeordnet sein und dann auch relativ zum Anpreßteil eine Art Taumelbewegung durchführen kann. Zum Einspannen des Kontaktteils können statt Schrauben und Federn auch andere dem Fachmann bekannte Spannmittel verwendet werden.

Statt der dargestellten runden, rechteckigen oder schneidenförmigen Querschnitte des Kontaktteils können auch bandförmige oder elliptische Querschnitte verwendet werden. Auch sind die verschiedenen Antriebsmöglichkeiten denkbar. Man kann das Anpreßteil antreiben, welches seine Bewegung auf das Kontaktteil überträgt. Man kann umgekehrt das Kontaktteil antreiben, welches seinerseits das Anpreßteil mitnimmt. Schließlich ist es möglich, nur auf das Schweißgut einen Vorschubantrieb einwirken zu lassen, so daß die Bewegung von Kontaktteil und Anpreßteil ausschließlich durch Reibungsmitnahme erfolgt. Besonders gute Schweißergebnisse dürften erreichbar sein, wenn sowohl das Schweißgut als auch das Elektrodensystem synchron angetrieben werden.

Eine erfindungsgemäße Vorrichtung erlaubt es, mit im Vergleich zu Kupferdrahtelektroden wesentlich höheren Anpreßdrücken zu arbeiten, dadurch eine gute Quetschnahtbildung zu erreichen und Materialverdickungen im Nahtbereich zu vermeiden und eine für die jeweils gewünschte Stromkonzentration erforderliche Elektrodeneindringtiefe zu erreichen. Aufgrund der guten Warmfestigkeit von Wolfram oder vergleichbaren Materialien tritt hierbei praktisch keine Querschnittsveränderung und/oder -längung des Kontaktteiles ein. Auch findet durch das legierungsinerte Kontaktteil kein oder nur ein unwesentliches Abtragen von Beschichtungsmetall wie z. B. Zinn von der Schweißstelle statt, so daß eine Schwächung des Korrosionsschutzes im Nahtbereich vermieden wird.

**Patentansprüche**

1. Vorrichtung zum elektrischen Widerstands-Rollennahtschweißen mit mindestens einer zur Abrollbewegung am Schweißgut bestimmten Elektrodenanordnung, die ein das Schweißgut nicht berührendes, an die Stromzufuhr angeschlossenes Anpreßteil aus einem elektrisch und thermisch gut leitfähigen Material, z. B. Kupfer, und ein als endlos umlaufendes Element ausgebildetes, zur abrollenden Anlage am Schweißgut bestimmtes Kontaktteil, das vom Anpreßteil gegen das Schweißgut anpreßbar ist, aufweist, dadurch gekennzeichnet, daß das Kontaktteil (3) als ein starrer Ring aus einem legierungsinerten und warmfesten Material ausgebildet ist, der das Anpreßteil (1) umgibt und an diesem in einer Relativbewegung zulassenden Weise geführt oder gehaltert ist.

2. Vorrichtung nach Anspruch 1, dadurch gekennzeichnet, daß das ringförmige Kontaktteil (3) konzentrisch zum Anpreßteil (1) angeordnet und auf diesem mittels Rollen (10) oder Kugeln (10') drehbar gelagert ist.

3. Vorrichtung nach Anspruch 1 dadurch gekennzeichnet, daß das ringförmige Kontaktteil (3) größeren Durchmesser als das Anpreßteil (1) aufweist und eine zu diesem exzentrischen Umlaufbewegung ausführt.

4. Vorrichtung nach Anspruch 3 dadurch gekennzeichnet, daß das ringförmige Kontaktteil (3) in seinem im Abstand vom Anpreßteil (1) verlaufenden Bereich durch Stütz- und Führungsrollen (5) drehbar gelagert ist.

5. Vorrichtung nach einem der Ansprüche 1 bis 4, dadurch gekennzeichnet, daß der Antrieb des umlaufenden Kontaktteils (3) durch das Anpreßteil (1) bewirkt wird.

6. Vorrichtung nach einem der Ansprüche 1 bis 5, dadurch gekennzeichnet, daß eine synchron zum Schweißgutvorschub antreibbare Antriebsrolle (5) am Kontaktteil angreift.

7. Vorrichtung nach Anspruch 5 oder 6, dadurch gekennzeichnet, daß das Kontaktteil (3) und das Anpreßteil (1) und/oder die Führungs- und Antriebsrollen (5) an ihren aneinander anliegenden Flächen aufgerauht und/oder mit im Sinne einer Verzahnung zusammenwirkenden Riffelungen versehen sind.

8. Vorrichtung nach einem der Ansprüche 1 bis 7, dadurch gekennzeichnet, daß das Anpreßteil (1) eine an den Querschnitt des Kontaktteils (3) angepaßte Führungsnut aufweist.

9. Vorrichtung nach einem der Ansprüche 1 bis 8, dadurch gekennzeichnet, daß das Kontaktteil (3) runden, flachen oder zum Schweißgut (2) hin keilförmigen Querschnitt aufweist

10. Vorrichtung nach Anspruch 3, dadurch gekennzeichnet, daß in dem im Abstand vom Anpreßteil (1) verlaufenden Teil des Umlaufweges des Kontaktteils (3) eine auf den Kontaktteil (3) einwirkende Kühl/-Begasungsvorrichtung (9) und/oder Reinigungsvorrichtung (6, 7, 8) angeordnet ist.

11. Vorrichtung nach Anspruch 1, dadurch gekennzeichnet, daß das Kontaktteil (3) mit für Wärmedehnungen ausreichender Radialbeweglichkeit zwischen Einspannflächen (11, 12, 13, 14) des Anpreßteils (1) mit einer für den Strom- und Wärmeübergang ausreichenden Anpreßkraft eingespannt ist.

12. Vorrichtung nach Anspruch 11, dadurch gekennzeichnet, daß das Anpreßteil (1) aus zwei, je eine der Einspannflächen (11, 12, 13, 14) aufweisenden Teilen (1a, 1b) besteht, die durch Spannmittel (15, 16) gegeneinander verspannt sind.

13. Vorrichtung nach Anspruch 12, dadurch gekennzeichnet, daß die Spannmittel als Schrauben (15) mit Federelementen (16) oder als Dehnungsschrauben ausgebildet sind.

14. Vorrichtung nach Anspruch 12, dadurch gekennzeichnet, daß die Teile (1a, 1b) des Anpreßteils zwischen sich einen Hohlraum (17) für die Kühlmittelzirkulation umschließen.

15. Vorrichtung nach Anspruch 14, dadurch gekennzeichnet, daß der Hohlraum (17) durch Abdichtungsteile (18, 19) gegen das Kontaktteil (3) abgedichtet ist.

16. Vorrichtung nach Anspruch 11, dadurch gekennzeichnet, daß die Einspannflächen (13, 14) des Anpreßteils (1) und die damit zusammenwirkenden Anlageflächen des Kontaktteils (3) geneigt zur Elektrodenachse verlaufen.

17. Vorrichtung nach Anspruch 1, dadurch gekennzeichnet, daß die Einspannflächen (13, 14) und/oder die mit ihnen zusammenwirkenden Anlageflächen des Kontaktteils (3) eine reibungsmindernde und/oder den Strom- und Wärmeübergang verbessernde Beschichtung aufweisen, z. B. versilbert sind.

18. Vorrichtung nach einem der Ansprüche 1—17, dadurch gekennzeichnet, daß das Kontaktteil (3) aus Wolfram oder Molybdän oder deren Legierungen besteht.

**Claims**

1. Apparatus for electrical resistance seam welding with at least one electrode arrangement intended for rolling action against the workpiece to be welded and comprising a pressure member (1) maintained out of contact with the workpiece, connected to the welding current supply and made of a material of good electrical and thermal conductivity, and a contact member (3) formed as an endless circulating element intended for rolling action against the workpiece, which can be pressed against the workpiece by means of the pressure member (1), characterized in that the contact member (3) is formed as a rigid ring of a heat-resistant and alloying-inert material, which surrounds the pressure member (1) and is guided and held by the pressure member (1) in a manner to permit a relative movement.

2. Apparatus according to claim 1 characterized in that the ring-shaped contact member (3) is arranged concentrically with respect to the pressure member (1) and ist rotatably supported on the pressure element by means of rollers (10) or balls (10').

3. Apparatus according to claim 1 characterized in that the ring-shaped contact member (3) has a larger diameter that the pressure member (1) and revolves eccentrically with respect to the pressure member.

4. Apparatus according to claim 3 characterized in that the ring-shaped contact member (3) is rotatably supported by means of supporting and guiding rollers (5) in the portion spaced from the pressure member (1).

5. Apparatus according to anyone of the claims 1 to 4 characterized in that the drive of the revolving contact member (3) is effected by means of the pressure member (1).

6. Apparatus according to anyone of the claims 1 to 5 characterized in that a drive roller (5) drivable synchronously with the feed of the workpiece acts upon the contact element.

7. Apparatus according to anyone of the claims 5 or 6 characterized in that the contact member (3) and the pressure member (1) and/or the guide and drive rollers (5) have their surfaces which contact one another roughened and/or provided with serrations interacting in a way similar to gearing.

8. Apparatus according to anyone of the claims 1 to 7 characterized in that the pressure member (1) is provided with a guide groove which conforms to the cross section of the contact member (3).

9. Apparatus according to anyone of the claims 1 to 8 characterized in that the contact member (3) has a round or flat cross section or a cross section tapering towards the workpiece (2).

10. Apparatus according to claim 3 characterized in that a cooling/gassing device (9) and/or a cleaning device (6, 7, 8) acting on the contact element (3) is arranged in that portion of the circular path of the contact element (3) which is spaced from the pressure element (1).

11. Apparatus according to claim 1 characterized in that the contact element (3) is clamped with a pressure which permits enough freedom of radial movement to cope with thermal expansion between the clamping surfaces (11, 12, 13, 14) of the pressure element (1) and which is sufficient to assure electric current and heat transfer.

12. Apparatus according to claim 11 characterized in that the pressure member (1) is composed of two parts (1a, 1b) comprising one of the clamping surfaces (11, 12, 13, 14) which are clamped against each other by means of clamping means (15, 16).

13. Apparatus according to claim 12 characterized in that the clamping means (15, 16) are formed as screws (15) with spring elements (16) or as expansion screws.

14. Apparatus according to claim 12 characterized in that the parts (1a, 1b) of the pressure member (1) form a cavity (17) between each other for the circulation of the cooling medium.

15. Apparatus according to claim 14 characterized in that the cavity (17) is sealed against the contact member (3) by means of sealing members (18, 19).

16. Apparatus according to claim 11 characterized in that the clamping surfaces (13, 14) of the pressure member (1) and the co-acting contact surfaces of the contact member (3) are inclined with respect to the axis of the electrode.

17. Apparatus according to claim 1 characterized in that the clamping surfaces (13, 14) and/or the co-acting contact surfaces of the contact member (3) comprise a friction reducing and/or current and heat transfer improving layer, e. g. are silver-plated.

18. Apparatus according to anyone of the claims 1 to 17 characterized in that the contact member (3) is made of tungsten or molybdenum or one of their alloys.

**Revendications**

1. Dispositif pour le soudage électrique par résistance en ligne continue à la molette, comprenant un système d'électrode destiné à rouler sur le produit à souder et comportant un élément de pression qui est raccordé à l'arrivée de courant et qui est fait d'une matière possédant une bonne conductibilité électrique et thermique, par exemple le cuivre, et un élément de contact qui est réalisé sous forme d'élément en circulation continue, qui est destiné à s'appliquer en roulant sur le produit à souder et qui peut être pressé contre le produit à souder par l'élément de pression, caractérisé en ce que l'élément de contact (3) est réalisé sous la forme d'un anneau rigide en une matière non alliable et résistante à la chaleur, anneau qui entoure l'élément de pression (1) et qui est guidé ou maintenu sur celui-ci de manière à permettre un mouvement relatif entre eux.

2. Dispositif selon la revendication 1, caractérisé en ce que l'élément de contact annulaire (3) est disposé concentriquement par rapport à l'élément de pression (1) et est monté à rotation sur celui-ci, au moyen de rouleaux (10) ou de billes (10').

3. Dispositif selon la revendication 1, caractérisé en ce que l'élément de contact annulaire (3) présente un diamètre plus grand que l'élément de pression (1) et effectue un mouvement circulaire excentrique par rapport à celui-ci.

4. Dispositif selon la revendication 3, caractérisé en ce que, dans la région où il s'étend à distance de l'élément de pression (1), l'élément de contact annulaire (3) est monté à rotation au moyen de poulies d'appui et de guidage (5).

5. Dispositif selon l'une quelconque des revendications 1 à 4, caractérisé en ce que l'entraînement de l'élément de contact (3) en rotation est effectué par l'élément de pression (1).

6. Dispositif selon l'une quelconque des revendications 1 à 5, caractérisé en ce qu'une poulie motrice (5), commandée en synchronisme avec l'avance du produit à souder, attaque l'élément de contact.

7. Dispositif selon la revendication 5 ou 6, caractérisé en ce que l'élément de contact (3) et l'élément de pression (1) et/ou les poulies de guidage et d'entraînement (5) sont rendus rugueux sur leurs surfaces en contact mutuel et/ou sont munis de striages qui coopèrent à la manière de dentures.

8. Dispositif selon l'une quelconque des revendications 1 à 7, caractérisé en ce que l'élément de pression (1) présente une gorge de guidage adaptée à la section de l'élément de contact (3).

9. Dispositif selon l'une quelconque des revendications 1 à 8, caractérisé en ce que l'élément de contact (3) présente une section ronde, aplatie ou en forme de coin vers le produit à souder (2).

10. Dispositif selon la revendication 3, caractérisé en ce qu'il est disposé, dans la partie du trajet circulaire de l'élément de contact (3) qui s'étend à distance de l'élément de pression (1), un dispositif de refroidissement/gazage (9) et/ou un dispositif de nettoyage (6, 7, 8) qui agissent sur l'élément de contact (3).

11. Dispositif selon la revendication 1, caractérisé en ce que l'élément de contact (3) est serré, avec une mobilité radiale suffisante pour des dilatations thermiques, entre des surfaces de serrage (11, 12, 13, 14) de l'élément de pression (1) qui exercent une force de pression suffisante pour la conduction du courant et la transmission de la chaleur.

12. Dispositif selon la revendication 11, caractérisé en ce que l'élément de pression (1) se compose de deux parties (1a, 1b) qui présentent chacune l'une des surfaces de serrage (11, 12, 13, 14) et qui sont serrées l'une contre l'autre par des moyens de serrage (15, 16).

13. Dispositif selon la revendication 12, caractérisé en ce que les moyens de serrage sont réalisés sous forme de vis (15) munies d'éléments à ressort (16) ou sous forme de vis de dilatation.

14. Dispositif selon la revendication 12, caractérisé en ce que les parties (1a, 1b) de l'élément de pression renferment entre elles une cavité (17) pour la circulation d'un fluide de refroidissement.

15. Dispositif selon la revendication 14, caractérisé en ce que la cavité (17) est fermée hermétiquement du côté de l'élément de contact (3), par des éléments d'étanchéité (18, 19).

16. Dispositif selon la revendication 11, caractérisé en ce que les surfaces de serrage (13, 14) de l'élément de pression (1) et les surfaces portantes de l'élément de contact (3) qui coopèrent avec elles sont inclinées par rapport à l'axe de l'électrode.

17. Dispositif selon la revendication 1, caractérisé en ce que les surfaces de serrage (13, 14) et/ou les surfaces portantes de l'élément de contact (3) qui coopèrent avec elles présentent un revêtement, par exemple une argenture, qui réduit le frottement et/ou améliore la transmission du courant et de la chaleur.

18. Dispositif selon l'une quelconque des revendications 1 à 17, caractérisé en ce que l'élément de contact (3) est fait de tungstène, de molybdène ou de leurs alliages.

# FIG.1

# FIG.2

# FIG.3

# FIG.4

0 019 196

FIG.5

FIG.6

13

# FIG. 7

# FIG. 8